# DEMANDE DE BREVET EUROPEEN

(11) **EP 2 952 384 A1**
(43) Date de publication de la demande: **09.12.2015**
(21) Numéro de dépôt: 15170851.8
(22) Date de dépôt: 05.06.2015
(51) Int. Cl.: B60Q 1/076, B60Q 1/12, F21S 8/10, F21V 29/00, F21V 21/30

(54) **MODULE D'ÉCLAIRAGE PIVOTANT ET PROJECTEUR CORRESPONDANT**

(30) Priorité: 06.06.2014 FR 1455170
(71) Demandeur: VALEO VISION, 93012 Bobigny Cedex (FR)
(72) Inventeur: Bailly, Stéphane, 44370 LA ROUXIERE (FR)

(57) **Abrégé**

L'invention a trait à un module d'éclairage et/ou de signalisation lumineuse (2), comprenant au moins une source lumineuse (16), au moins un réflecteur (4) configuré pour réfléchir les rayons lumineux de la ou d'au moins une des sources lumineuses, un radiateur (6) supportant la ou les sources lumineuses (16) et le réflecteur (4), un actionneur (30) du radiateur (6) autour d'un axe de pivotement, un bâti (8) supportant l'actionneur (30). Le radiateur (6) comprend des moyens de pivotement libre (28) coopérant avec le bâti (8), et des moyens d'entrainement en rotation (36) coopérant avec l'actionneur (30). Les moyens de pivotement et d'entrainement (28, 36) sont alignés suivant l'axe de pivotement du radiateur (6) de manière à le maintenir sur deux points distants l'un de l'autre.

L'invention a trait également à un projecteur comprenant un tel module d'éclairage.

## Description

L'invention a trait au domaine de l'éclairage et/ou de la signalisation lumineuse, plus particulièrement au domaine de l'éclairage et/ou de la signalisation lumineuse automobile. Plus particulièrement encore, l'invention a trait au domaine de l'éclairage pivotant, c'est-à-dire l'éclairage dont la direction est variable en fonction de la trajectoire suivie par le véhicule, basée notamment sur l'angle de braquage du véhicule.

Le document de brevet EP 2 020 336 A1 divulgue un dispositif de montage d'un module optique dans un projecteur de véhicule automobile. Le module optique est du type feux de croisement ou « code » pivotant, c'est-à-dire apte à pivoter en fonction de la trajectoire du véhicule. Cette fonction pivotante est communément désignée « code virage » ou encore par l'acronyme anglo-saxon DBL signifiant « Dynamic Bending Light ». Le module comprend une partie mobile constituée essentiellement d'un radiateur supportant une source lumineuse du type diode à électroluminescence et un double réflecteur apte à réfléchir les rayons de la diode en un faisceau d'éclairage. Le module comprend également une partie fixe supportant de manière pivotante la partie mobile. La partie fixe est constituée essentiellement d'un bâti, d'un actionneur et d'un axe monté pivotant sur le bâti et supportant la partie mobile. Le bâti comprend en effet une portion supérieure supportant l'axe, ce dernier étant entrainé en rotation par l'actionneur situé en position inférieure. L'extrémité supérieure de l'axe est rigidement liée au radiateur. La partie mobile du module est ainsi disposée en porte-à-faux sur l'axe pivotant du bâti. Ce type de montage est intéressant d'un point de vue construction et assemblage mais présente toutefois l'inconvénient du manque de rigidité de la liaison en porte-à-faux. En effet, dans le cas de modules d'éclairage volumineux et potentiellement lourds, ce type de montage peut générer des vibrations au niveau du module, des variations d'inclinaison du faisceau d'éclairage et, partant, un scintillement dudit faisceau. De plus, l'addition des épaisseurs de l'actionneur, de la liaison entre l'axe et l'actionneur, de la zone de l'axe supportée par le bâti et ensuite de l'épaisseur intrinsèque du radiateur génère un encombrement vertical potentiellement pénalisant.

Le document de brevet EP 1 431 118 A2 divulgue un actionneur pour module d'éclairage de véhicule automobile, plus particulièrement pour une fonction du type DBL ou encore « code virage ». Similairement à l'enseignement précédent, le montage pivotant du module d'éclairage est un montage en porte-à-faux et présente par conséquent les mêmes inconvénients.

L'invention a pour objectif de proposer un montage pivotant de module d'éclairage et/ou de signalisation lumineuse qui pallie au moins un des inconvénients de l'état de la technique sus mentionné. Plus particulièrement, l'invention a pour objectif de proposer un montage pivotant de module d'éclairage et/ou de signalisation lumineuse qui soit plus robuste et plus compact.

L'invention a pour objet un module d'éclairage et/ou de signalisation lumineuse, comprenant: au moins une source lumineuse; un réflecteur configuré pour réfléchir les rayons lumineux de la ou d'au moins une des sources lumineuses; un radiateur supportant la ou les sources lumineuses et le réflecteur; un actionneur du radiateur autour d'un axe de pivotement; un bâti supportant l'actionneur; remarquable en ce que le radiateur comprend des moyens de liaison en pivotement libre avec le bâti, et des moyens d'entrainement en rotation avec l'actionneur.

Les moyens de liaison et d'entrainement sont préférentiellement distincts.

Selon un mode avantageux de l'invention, les moyens de liaison et les moyens d'entrainement sont alignés suivant l'axe de pivotement du radiateur, ledit axe étant préférentiellement au moins essentiellement vertical.

Selon un mode avantageux de l'invention, les moyens de liaison sont situés au-dessus des moyens d'entrainement.

Selon un mode avantageux de l'invention, les moyens de liaison comprennent une surface de révolution en contact glissant avec une surface correspondante du bâti. Le contact glissant peut être direct ou indirect via notamment une bague ou un manchon en matériau de friction, tel que du PTFE ou du bronze.

Selon un mode avantageux de l'invention, la surface de révolution des moyens de liaison est une surface intérieure, la surface correspondante du bâti étant une surface extérieure. Le bâti peut comprendre un axe ou une fusée, préférentiellement rigidement lié au bâti, et coopérant avec la surface intérieure des moyens de liaison du radiateur.

Selon un mode avantageux de l'invention, les moyens d'entrainement comprennent une surface apte à engager avec une surface correspondante de l'actionneur, lesdites surfaces étant configurées pour coopérer en rotation. La surface correspondante de l'actionneur peut être celle d'un arbre de sortie ou de transmission dudit actionneur.

Selon un mode avantageux de l'invention, les surfaces d'engagement des moyens d'entrainement et de l'actionneur sont configurées pour assurer également un maintien du radiateur sur son axe de pivotement.

Selon un mode avantageux de l'invention, la surface d'engagement des moyens d'entrainement est une surface intérieure et la surface correspondante de l'actionneur est une surface extérieure.

Selon un mode avantageux de l'invention, les surfaces d'engagement des moyens de liaison du radiateur et du bâti s'étendent sur l'axe de pivotement sur plus de 150%, préférentiellement 200%, plus préférentiellement 250% de l'étendue des surfaces d'engagement des moyens d'entrainement du radiateur et de l'actionneur selon ledit axe.

Selon un mode avantageux de l'invention, le bâti comprend une première portion supportant l'actionneur et une deuxième portion en vis-à-vis et à distance de la première portion suivant la direction de l'axe de rotation du radiateur, ladite deuxième portion coopérant avec les moyens de liaison du radiateur.

Selon un mode avantageux de l'invention, le réflecteur s'étend au-dessus de la deuxième portion du bâti.

Selon un mode avantageux de l'invention, la deuxième portion du bâti s'étend essentiellement verticalement depuis la première portion et essentiellement horizontalement vers les moyens de liaison du radiateur.

Selon un mode avantageux de l'invention, le radiateur comprend des ailettes de refroidissement situées entre les première et deuxième portions du bâti.

Selon un mode avantageux de l'invention, la deuxième portion comprend des ouvertures au droit des ailettes du radiateur et aptes à permettre une circulation d'air le long desdites ailettes en vue d'évacuer les calories provenant de la ou des sources lumineuses.

Selon un mode avantageux de l'invention, la ou les sources lumineuses sont situées sur une face avant du radiateur située à l'avant de son axe de pivotement et le réflecteur comprend une première surface réfléchissante de profil elliptique disposée en face de la ou d'au moins une des sources lumineuses, et une deuxième surface de profil parabolique disposée en arrière de ladite première surface et essentiellement au-dessus des moyens de liaison et d'entrainement du radiateur.

L'invention a également pour objet un projecteur pour véhicule automobile, comprenant un module d'éclairage pivotant, remarquable en ce que le module est conforme à l'invention.

Les mesures de l'invention sont intéressantes en ce qu'elles permettent d'assurer un soutien en pivotement du radiateur et des composants qu'il supporte de manière optimale, particulièrement résistante aux vibrations occasionnées par le roulage du véhicule sur des mauvais revêtements. En effet, la présence sur le radiateur de deux moyens séparés pour assurer le soutien en pivotement et l'entrainement en rotation, respectivement, permet d'éviter le porte-à-faux présent dans l'état de la technique discuté précédemment. Les moyens de liaison assurant un maintien en pivotement libre du radiateur peuvent coopérer avec un élément correspondant rigidement lié au bâti. Ces moyens, combinés à l'élément correspondant du bâti, peuvent ainsi assurer un soutien en pivotement du radiateur particulièrement rigide et stable. Les moyens d'entrainement, distincts des moyens de liaison, peuvent se concentrer sur la transmission de couple en vue du pivotement du radiateur. Ils peuvent également assurer un maintien du radiateur selon son axe de pivotement, renforçant ainsi la fonction assurée par les moyens de liaison.

D'autres caractéristiques et avantages de la présente invention seront mieux compris à l'aide de la description et des dessins parmi lesquels :
- La figure 1 est une en perspective d'un module d'éclairage conforme à l'invention ;
- La figure 2 est une vue éclatée du module de la figure 1
- La figure 3 est une vue en perspective de la partie mobile du module des figures 1 et 2 ;
- La figure 4 est une vue en perspective de la partie fixe du module des figures 1 et 2 ;
- La figure 5 est une vue partielle en coupe longitudinale du module des figures 1 à 4.

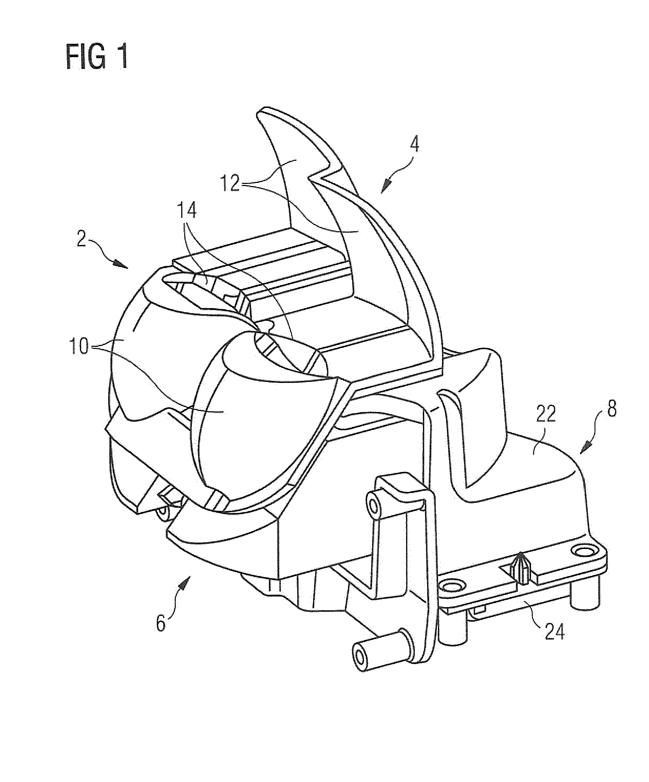

La figure 1 illustre un module d'éclairage conforme à l'invention. Le module 2 illustré est du type feux de croisement pivotant, communément appelé « code virage » ou encore DBL (acronyme pour « Dynamic Bending Light ») et optionnellement avec une fonction d'éclairage route sélectif communément appelée ADB (acronyme de « Adaptive Driving Beam »). La fonction feux de croisement ou encore « code » correspond à un faisceau d'éclairage avec une coupure essentiellement horizontale, alors que la fonction d'éclairage route correspond à un faisceau d'éclairage sans coupure. Dans le cas d'une fonction d'éclairage route sélectif, le faisceau d'éclairage route présente une coupure essentiellement verticale destinée à former une zone de moindre éclairage. Cette zone est destinée à un véhicule croisé ou suivi de manière à ne pas l'éblouir. Cette technologie est connue en soi de l'homme de métier et ne sera d'avantage détaillée.

Le module 2 comprend essentiellement un réflecteur 4 disposé sur un refroidisseur 6 monté pivotant sur un bâti 8. Ce dernier comprend essentiellement une première portion inférieure 24 et une deuxième portion supérieure 22.

Le radiateur supporte également deux sources lumineuses du type diode à électroluminescence, non visibles à la figure 1. Le réflecteur 4 est double et à double-réflexion. En effet, il comprend deux paires de surfaces réfléchissantes disposées côte-à-côte, chacune produisant un faisceau d'éclairage. Chacune des paires comprend une première surface réfléchissante 10 en forme de demi-coquille à profil ellipsoïdal et disposée en face d'une source lumineuse. La source lumineuse est située essentiellement à un des foyers du profil ellipsoïdal. Chacune des paires de surfaces réfléchissantes comprend une deuxième surface réfléchissante 12 de profil parabolique dont le foyer correspond essentiellement au deuxième foyer du profil ellipsoïdal de la première surface réfléchissante 10. Les rayons émis par la source lumineuse sont ainsi réfléchis par la première surface 10 vers la deuxième surface 12 qui elle-même les réfléchit pour former un faisceau d'éclairage vers l'avant du module.

Le contour 14 de l'orifice de sortie des rayons du volume de la première surface réfléchissante détermine la forme et plus particulièrement la coupure du faisceau produit. On peut en effet observer que les contours 14 des orifices des deux premières surfaces réfléchissantes 10 sont différents. Cet aspect est en soi connu de l'homme de métier et ne sera par conséquent pas davantage détaillé.

Le radiateur 6, les sources lumineuses et le réflecteur 4 sont pivotants par rapport au bâti 8, comme cela va apparaître plus clairement en relation avec les figures suivantes.

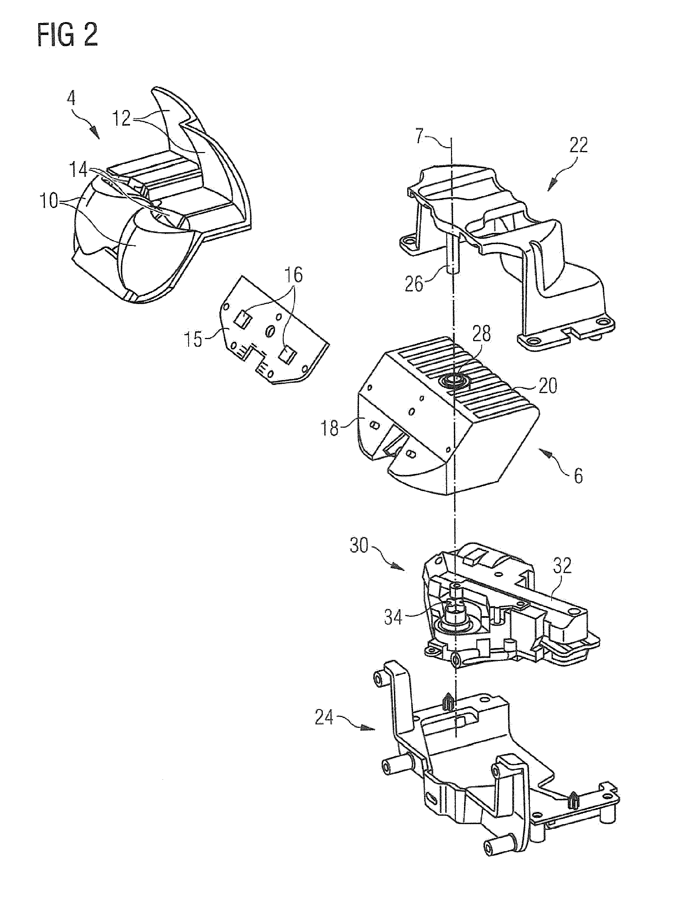

La figure 2 est une vue éclatée du module de la figure 1. On peut y observer la construction du module 2. Le bâti 8 est constitué essentiellement d'une première partie ou portion inférieure 24 et d'une deuxième partie ou portion supérieure 22. La portion inférieure 24 supporte un actionneur 30. Ce dernier comprend essentiellement un boîtier 32 renfermant un moteur électrique (non visible) et des éléments de transmission tels que des arbres et engrenages (également non visibles). L'actionneur 30 comprend également un arbre de sortie 34 pourvu d'une surface extérieure avec des portions d'appui aptes à assurer une liaison en rotation avec le radiateur 6.

La deuxième portion 22 du bâti 8 est située au droit et à distance de la première portion 24 de manière à former un volume apte à recevoir le radiateur 6. Ce dernier comprend un orifice circulaire 28 correspondant à son axe de pivotement 7 et coopérant avec une portion cylindrique 26 de la deuxième portion 22. L'orifice circulaire 28 correspond à des moyens de liaison en pivotement du radiateur avec le bâti. Le radiateur comprend également sur sa face inférieure des moyens d'entraînement (non visibles) coopérant avec l'arbre d'entrainement 34 de l'actionneur 30.

Le radiateur 6 est en matériau conducteur thermiquement, comme par exemple de l'aluminium. Il est préférentiellement massif, c'est-à-dire d'un seul tenant. Il comprend une face avant 18 destinée à recevoir la ou les sources lumineuses 16. Celle(s)-ci peut/peuvent être montée sur un support 15 généralement plan, ce dernier étant fixé à la face avant inclinée 18 du radiateur 6. Ce dernier peut comprendre également des ailettes 20 de refroidissement, ces ailettes 20 étant préférentiellement situées à l'arrière de la face avant 18. Le réflecteur 4 est disposé sur le radiateur 6 pourvu des sources lumineuses 16 de manière à ce que les surfaces réfléchissantes de profil ellipsoïdal 10 viennent en contact avec la face avant 18 du radiateur 6, ou, du moins, avec le support 15 des sources lumineuses 16. Selon la variante de réalisation représentée, la face avant 18 du radiateur 6 est inclinée par rapport à l'axe longitudinal central de l'orifice circulaire 28. Il va de soi que cette face avant 18 pourra également être orientée perpendiculairement audit axe, en fonction des choix par l'homme du métier des surfaces optiques du réflecteur et du faisceau lumineux qu'il souhaite générer, et notamment dans une variante du réflecteur 4 dépourvue des premières surfaces réfléchissantes 10.

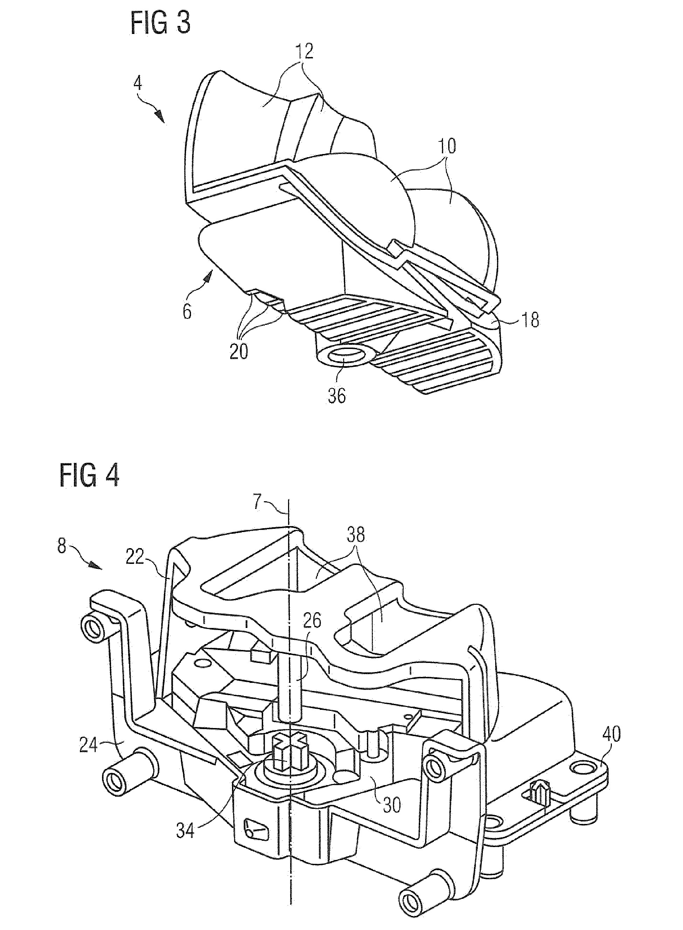

La figure 3 illustre la partie mobile du module des figures 1 et 2, c'est-à-dire essentiellement le radiateur 6, les sources lumineuses (non visibles) et le réflecteur 4. Les moyens d'entrainement 36 du radiateur 6 sont bien visibles. Dans le cas précis de cet exemple de réalisation de l'invention, il s'agit d'un orifice traversant le corps du radiateur depuis la face supérieure jusqu'à la face inférieure, formant ainsi les moyens de liaison 28 (figure 2) et les moyens d'entrainement. La portion inférieure de l'orifice en question comprend toutefois une surface intérieure non symétrique en révolution, c'est-à-dire comprenant des portions d'appui en rotation de manière à permettre la transmission de couple depuis l'arbre de sortie 34 (figure 2) de l'actionneur. On peut observer que les ailettes 20 s'étendent sur la majeure partie de la hauteur du radiateur. Elles s'étendent horizontalement depuis la face avant inclinée 18.

La figure 4 illustre la partie fixe du module des figures 1 et 2, c'est-à-dire essentiellement le bâti 8 et l'actionneur 30. Ce dernier est logé dans une cavité formée dans la première portion 24 du bâti 8. La deuxième portion 22 du bâti 8 peut être fixée à la première 24 portion au moyen de brides 40, notamment au niveau latéral. La deuxième portion 22 complète ainsi la cavité formée par la première portion 24. Elle s'étend en partie verticalement et en partie horizontalement de manière à délimiter un volume de plus grande importance apte à recevoir le radiateur. Elle comprend des ouvertures 38 sur sa partie horizontale, de manière à favoriser la convection naturelle ou forcée le long des ailettes de refroidissement du radiateur. Elle supporte de manière essentiellement rigide la portion cylindrique 26 destinée à coopérer avec l'orifice correspondant du radiateur. Cette portion cylindrique est alignée avec l'arbre de sortie 34 de l'actionneur 30.

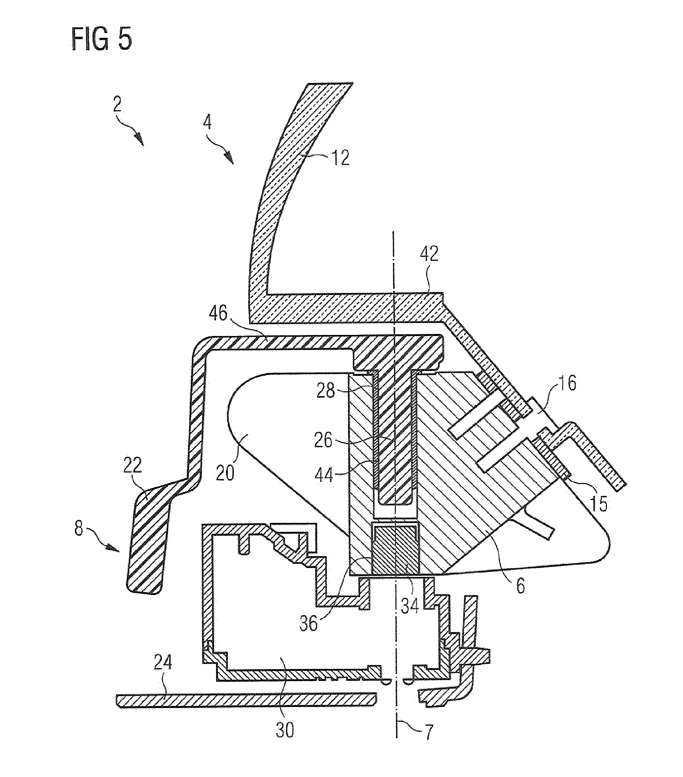

La figure 5 est une vue en coupe partielle du module des figures 1 à 4. On peut observer la cavité formée dans le bâti, plus particulièrement par sa deuxième portion 22 s'étendant majoritairement verticalement depuis la première portion 24 et ensuite essentiellement horizontalement vers l'avant jusqu'à la portion cylindrique 26 servant de pivot pour l'orifice cylindrique 28 du radiateur 6. Une bague ou un manchon de friction 44 peut être prévu entre l'orifice cylindrique 28 et le pivot 26. Il peut être en matériau présentant un faible coefficient de friction tel que du téflon® (polytétrafluoroéthylène ou PTFE) ou encore du bronze.

La surface intérieure de l'orifice pivot 36 au niveau de la face inférieure du corps de radiateur 6 présente un profil apte à engager en rotation avec la surface extérieure de l'arbre de sortie 34 de l'actionneur 30. Le profil de cette surface intérieure n'est pas visible. Il peut correspondre essentiellement à celui de la surface extérieure de l'arbre de sortie 34 tel qu'il est visible à la figure 4. L'arbre de sortie 34 de l'actionneur 30 et le radiateur 6 sont ainsi liés en rotation. De plus, l'ajustement limité au niveau de l'emmanchement entre l'arbre de sortie 34 et la surface intérieure 36 correspondante permet également à cette coopération d'assurer une fonction pivot en position basse du radiateur, en complément de la fonction pivot assurée par les éléments 26 et 28 décrits ci-avant.

L'arbre de sortie 34 de l'actionneur 30 peut comprendre un épaulement (visible aux figures 4 et 5) apte à reprendre les efforts de gravité du radiateur. Les forces de gravité du radiateur sont ainsi essentiellement reprises par l'arbre de sortie 34 et l'actionneur 30 en question.

Sur la figure 5, la première surface réfléchissante 10 en forme de demi-coquille du réflecteur 4 n'a pas été représentée. Il est intéressant de noter que le réflecteur 4 s'étend au-dessus de la deuxième portion 22 du bâti 8 : il comprend en effet une portion 42 s'étendant essentiellement horizontalement et parallèlement à la partie 46 correspondante de la deuxième portion 22 du bâti 8. Un jeu mécanique est prévu entre la surface inférieure de la portion 42 du réflecteur 4 et la surface supérieure de la partie 46 de la deuxième portion 22 du bâti. Ce jeu peut par exemple être compris entre 0.5 et 5mm. En cas de sollicitations du module, notamment en vibrations selon une composante verticale, le réflecteur 4 se déformant quelque peu pourra venir en contact avec la portion 46 du bâti et ainsi y prendre appui.

Il est intéressant de noter que le pivot 26 et la surface intérieure correspondante 28 s'étendent sur plus de 150%, préférentiellement 200%, plus préférentiellement encore 250% de la hauteur sur laquelle s'étendent l'arbre de sortie 34 et la surface correspondante 36.

## Revendications

1. Module d'éclairage et/ou de signalisation lumineuse (2), comprenant :
- au moins une source lumineuse (16) ;
- un réflecteur (4) configuré pour réfléchir les rayons lumineux de la ou d'au moins une des sources lumineuses (16) ;
- un radiateur (6) supportant la ou les sources lumineuses (16) et le réflecteur (4) ;
- un actionneur (30) du radiateur (6) autour d'un axe de pivotement (7) ;
- un bâti (8) supportant l'actionneur (30) ;
**caractérisé en ce que**
le radiateur (6) comprend
- des moyens de liaison (28) en pivotement libre avec le bâti (8), et
- des moyens d'entrainement (36) en rotation avec l'actionneur (30).

2. Module d'éclairage et/ou de signalisation lumineuse (2) selon la revendication 1, **caractérisé en ce que** les moyens de liaison (28) et les moyens d'entrainement (36) sont alignés suivant l'axe de pivotement (7) du radiateur (6), ledit axe étant préférentiellement au moins essentiellement vertical.

3. Module d'éclairage et/ou de signalisation lumineuse (2) selon la revendication 2, **caractérisé en ce que** les moyens de liaison (28) sont situés au-dessus des moyens d'entrainement (36).

4. Module d'éclairage et/ou de signalisation lumineuse (2) selon l'une des revendications 1 à 3, **caractérisé en ce que** les moyens de liaison (28) comprennent une surface de révolution en contact glissant avec une surface correspondante (26) du bâti (8).

5. Module d'éclairage et/ou de signalisation lumineuse (2) selon la revendication 4, **caractérisé en ce que** la surface de révolution des moyens de liaison (28) est une surface intérieure, la surface correspondante du bâti (8) étant une surface extérieure (26).

6. Module d'éclairage et/ou de signalisation lumineuse (2) selon l'une des revendications 1 à 5, **caractérisé en ce que** les moyens d'entrainement (36) comprennent une surface apte à engager avec une surface correspondante de l'actionneur (30), lesdites surfaces étant configurées pour coopérer en rotation.

7. Module d'éclairage et/ou de signalisation lumineuse (2) selon la revendication 6, **caractérisé en ce que** les surfaces d'engagement des moyens d'entrainement (36) et de l'actionneur (30) sont configurées pour assurer également un maintien du radiateur sur son axe de pivotement (7).

8. Module d'éclairage et/ou de signalisation lumineuse (2) selon l'une des revendications 6 et 7, **caractérisé en ce que** la surface d'engagement des moyens d'entrainement (36) est une surface intérieure et la surface correspondante de l'actionneur (30) est une surface extérieure.

9. Module d'éclairage et/ou de signalisation lumineuse (2) selon l'une des revendications 4 et 5 et l'une des revendications 6 à 8, **caractérisé en ce que** les surfaces d'engagement des moyens de liaison (28) du radiateur (6) et du bâti (8) s'étendent sur l'axe de pivotement (7) sur plus de 150%, préférentiellement 200%, plus préférentiellement 250% de l'étendue des surfaces d'engagement des moyens d'entrainement (36) du radiateur (6) et de l'actionneur (30) selon ledit axe.

10. Module d'éclairage et/ou de signalisation lumineuse (2) selon l'une des revendications 1 à 9, **caractérisé en ce que** le bâti (8) comprend une première portion (24) supportant l'actionneur (30) et une deuxième portion (22) en vis-à-vis et à distance de la première portion (24) suivant la direction de l'axe de pivotement (7) du radiateur (6), ladite deuxième portion (22) coopérant avec les moyens de liaison (28) du radiateur (6).

11. Module d'éclairage et/ou de signalisation lumineuse (2) selon la revendication 10, **caractérisé en ce que** le réflecteur (4) s'étend au-dessus de la deuxième portion (22) du bâti (8).

12. Module d'éclairage et/ou de signalisation lumineuse (2) selon l'une des revendications 10 et 11, **caractérisé en ce que** la deuxième portion (22) du bâti (8) s'étend essentiellement verticalement depuis la première portion (24) et essentiellement horizontalement vers les moyens de liaison (28) du radiateur (6).

13. Module d'éclairage et/ou de signalisation lumineuse (2) selon l'une des revendications 10 à 12, **caractérisé en ce que** le radiateur (6) comprend des ailettes de refroidissement (20) situées entre les première et deuxième portions (24, 22) du bâti (8).

14. Module d'éclairage et/ou de signalisation lumineuse (2) selon la revendication 13, **caractérisé en ce que** la deuxième portion (22) comprend des ouvertures (38) au droit des ailettes (20) du radiateur (6) et aptes à permettre une circulation d'air le long desdites ailettes en vue d'évacuer les calories provenant de la ou des sources lumineuses (16).

15. Module d'éclairage et/ou de signalisation lumineuse (2) selon l'une des revendications 1 à 14, **caractérisé en ce que** la ou les sources lumineuses (16) sont situées sur une face avant (18) du radiateur (6) située à l'avant de son axe de pivotement (7) et le réflecteur comprend une première surface réfléchissante (10) de profil elliptique disposée en face de la ou d'au moins une des sources lumineuses (16), et une deuxième surface réfléchissante (12) de profil parabolique disposée en arrière de ladite première surface (10) et essentiellement au-dessus des moyens de liaison (28) et la moyens d'entrainement (36) du radiateur (6).

16. Projecteur pour véhicule automobile, comprenant un module d'éclairage pivotant, **caractérisé en ce que** le module est conforme à l'une des revendications 1 à 15.
